# EUROPÄISCHE PATENTSCHRIFT

(11) **EP 1 554 819 B1**
(45) Veröffentlichungstag und Bekanntmachung des Hinweises auf die Patenterteilung: **18.09.2013**
(21) Anmeldenummer: 03757876.2
(22) Anmeldetag: 19.09.2003
(51) Int. Cl.: H04B 7/06

(54) **VERFAHREN ZUR DATENÜBERTRAGUNG**
METHOD FOR TRANSMITTING DATA
PROCEDE DE TRANSMISSION DE DONNEES

(30) Priorität: 25.10.2002 EP 02023968
(43) Veröffentlichungstag der Anmeldung: 20.07.2005
(73) Patentinhaber: Nokia Siemens Networks GmbH & Co. KG, 81541 München (DE)
(72) Erfinder: FREY, Thomas, 89081 Ulm (DE); REINHARDT, Markus, 89231 Neu-Ulm (DE); SEEGER, Alexander, 85622 Feldkirchen (DE); VIERING, Ingo, 81539 München (DE); KIESSLING, Mario, 89075 Ulm (DE); PURAT, Marcus, 12209 Berlin (DE)
(86) Internationale Anmeldenummer: PCT/EP2003/010483
(87) Internationale Veröffentlichungsnummer: WO 2004/038955

(56) Entgegenhaltungen:
- EP-A- 1 175 022
- EP-A- 1 229 669
- WO-A-01/69814
- US-A1- 2002 105 923
- "UNIVERSAL MOBILE TELECOMMUNICATIONS SYSTEM (UMTS);PHYSICAL LAYER PROCEDURES(FDD) (3GPP TS 25.214 VERSION 3.4.0 RELEASE 1999)" ETSI TS 125 214 V3.4.0, XX, XX, September 2000 (2000-09), Seiten 1-48, XP002166612

## Beschreibung

Die Erfindung betrifft ein Verfahren zur Datenübertragung von einer zentralen Funkkommunikationseinrichtung zu einem Teilnehmer eines UMTS-FDD-Funkkommunikationssystems.

Bei einem UMTS-FDD-Funkkommunikationssystem, Release '99, ist derzeit eine Verwendung von zwei Sendeantennen, die seitens einer zentralen Funkkommunikationseinrichtung (NodeB) angeordnet sind und eine Space-Diversity-Antenneneinrichtung bilden, standardisiert. Mit Hilfe der beiden Sendeantennen, über die ein Teilnehmersignal im Downlink von einer zentralen Funkkommunikationseinrichtung zum Teilnehmer gleichzeitig abgestrahlt wird, wird ein Diversity-Gewinn erzielt, der zu einer Erhöhung einer Funkübertragungskapazität führt.

Eine Verwendung von mehr als zwei Sendeantennen, bzw. eine Verwendung eines sendeseitig angeordneten Antennenarrays bzw. einer sendeseitig angeordneten Smart-Antenna-Anordnung, sowie Signalverarbeitungsalgorithmen für eine durchzuführende Strahlungsdiagrammformung (Beamforming) werden derzeit auf ihre Einsatzmöglichkeit bei einer zentralen Funkkommunikationseinrichtung eines UMTS-FDD-Funkkommunikationssystem untersucht.

Dabei sind einerseits sogenannte "Feedback-Information" basierte Verfahren ("Closed-Loop"-Verfahren) und andererseits sogenannte "Uplink-Information" basierte Verfahren zur Datenübertragung von der zentralen Funkkommunikationseinrichtung (NodeB) zum Teilnehmer bekannt.

Beim "Closed-Loop"-Verfahren werden seitens des NodeB als zentraler Funkkommunikationseinrichtung zwei Sendeantennen zur Datenübertragung bzw. zur Abstrahlung von Teilnehmersignalen im Downlink verwendet. Mit Hilfe des Diversity-Gewinns wird eine Erhöhung der Funkübertragungskapazität erreicht. Eine bei diesem Verfahren einzuführende Signalisierung von Feedback-Informationen zwischen Teilnehmer und NodeB verursacht lediglich geringen zusätzlichen Signalisierungsaufwand.

Zu den "Uplink-Information" basierten Verfahren ist beispielsweise ein sogenanntes "Grid-of-Beam"-Verfahren zuördenbar, bei dem beim NodeB sendeseitig eine Strahlungsdiagrammformung zur Gewinnerhöhung durchgeführt wird. Bei diesem Verfahren wird eine beträchtlichen Erhöhung der Funkübertragungskapazität innerhalb des Funkkommunikationssystems erreicht.

Aus EP 1 229 669 A1 ist ein Kommunikationssystem benannt, bei dem ein QPSK-moduliertes Basisbandsignal an zwei Pfade gelangt. In einem ersten Signalpfad wird dieses Signal mit einem so genannten "pathl-pilot" mit Hilfe eines Multiplexverfahrens überlagert. Das überlagerte Signal wird mit einem ersten Code verwürfelt und mit einem ersten Spreizcode gespreizt. Nachfolgend wird ein Beamforming-Verfahren angewendet. Parallel dazu wird in einem zweiten Pfad das QPSK-modulierte Basisbändsignal mit einem so genannten "path2-pilot" mit Hilfe eines Multiplexverfahrens überlagert. Das überlagerte Signal wird mit einem zweiten Code verwürfelt und mit einem zweiten Spreizcode gespreizt. Nachfolgend wird auch hier ein Beamforming-Verfahren angewendet. Jeweils zugeordnete Ausgangssignale zweier Beamformer werden mittels Addierer überlagert, in einen Trägerfrequenzbereich umgesetzt und über Antennen abgestrahlt.

Es ist Aufgabe der vorliegenden Erfindung, ein Verfahren zur Datenübertragung von einer zentralen Funkkommunikationseinrichtung zu einem Teilnehmer derart zu verbessern, dass in einem FDD-UMTS-Funkkommunikationssystem eine Erhöhung der Funkübertragungskapazität erzielt wird.

Diese Aufgabe wird durch die Merkmale des Patentanspruchs 1 gelöst. Vorteilhafte Weiterbildungen sind in den Unteransprüchen angegeben.

Bei der vorliegenden Erfindung werden das "Closed-Loop"-Verfahren und das "Grid-of-Beam"-Verfahren miteinander kombiniert. Dabei wird einerseits eine Erhöhung der Funkübertragungskapazität dadurch erreicht, dass mit Hilfe der Strahlungsdiagrammformung eine Gewinnerhöhung erzielt wird, und andererseits wird die Funkübertragungskapazität dadurch erhöht, dass mit Hilfe des sendeseitigen Antennendiversity ein Diversity-Gewinn erzielt wird. Das sendeseitige Antennendiversity wird dabei mit Hilfe einer Space-Diversity-Antennenanordnung oder mit Hilfe einer Polarisations-Diversity-Antennenanordnung realisiert.

Besonders bevorzugt werden bei der vorliegenden Erfindung sogenannte "Dual-Polarisierte"-Sendeantennen bei der Polarisations-Diversity-Antennenanordnung verwendet. Diese weisen in einem Antennengehäuse platzsparend üblicherweise zwei getrennt anzusteuernde Polarisationen auf. Mit derartigen Sendeantennen sind Antennen-Arrays bzw. Smart-Antennas mit geringen mechanischen Abmessungen realisierbar.

Besonders vorteilhaft werden bei der vorliegenden Erfindung entweder horizontal-vertikal-polarisierte Antennen oder Xpolarisierte Antennen, die eine +45°Polarisation und eine - 45°Polarisation aufweisen, verwendet.

Besonders bei einer Funkversorgung innerhalb von Städten mit einer hohen Teilnehmerdichte ist das erfindungsgemäße Verfahren aufgrund der erzielbaren Erhöhung der Funkübertragungskapazität besonders vorteilhaft einsetzbar.

Im Folgenden wird ein Ausführungsbeispiel der vorliegenden Erfindung anhand einer Zeichnung näher erläutert. Dabei zeigt:
- FIG 1: ein Blockschaltbild zur Datenübertragung mit Hilfe eines "Closed-Loop"-Verfahrens, gemäß dem Stand der Technik,
- FIG 2: ein Blockschaltbild zur Datenübertragung mit Hilfe eines "Grid-of-Beam"-Verfahrens, gemäß dem Stand der Technik, und
- FIG 3: ein Blockschaltbild zur Datenübertragung gemäß der vorliegenden Erfindung.

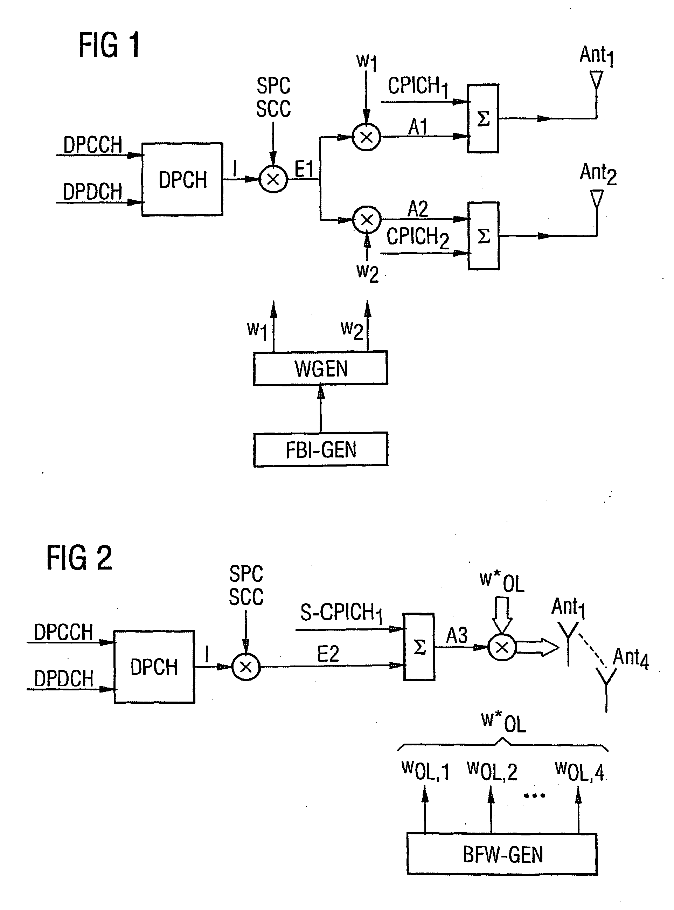

FIG 1 zeigt ein Blockschaltbild zur Datenübertragung mit Hilfe eines "Closed-Loop"-Verfahrens, gemäß dem Stand der Technik.

Bei einem FDD-UMTS-Funkkommunikationssystem, Release '99, werden Steuerungsdaten eines sogenannten "Dedicated Physical Control Channel" (DPCCH), der einen teilnehmerspezifischen physikalischen Kontrollübertragungskanal bildet, mit Daten eines sogenannten "Uplink Dedicated Physical Data Channel" (DPDCH), der einen teilnehmerspezifischen physikalischen Datenübertragungskanal bildet, mit Hilfe eines Multiplexverfahrens zu einem Informationssignal I eines sogenannten "Dedicated Physical Channel" (DPCH) zusammengefasst, der einen teilnehmerspezifischen physikalischen Übertragungskanal bildet.

Das Informationssignal I wird mit Hilfe eines Spreizcodes SPC ("spreading code") und mit Hilfe eines Verwürfelungscodes SCC ("scrambling code") gespreizt, verwürfelt und dadurch ein Eingangssignal E1 für eine nachfolgende Verarbeitung gebildet.

Seitens einer als NodeB ausgestalteten zentralen Funkkommunikationseinrichtung sind zwei Sendeantennen Ant1 bzw. Ant2 in einer Space-Diversity-Antennenanordnung vorgesehen. Für jede dieser Sendeantennen Ant1 bzw. Ant2 wird das Eingangssignal E1 jeweils mit teilnehmerspezifischen Wichtungsfaktoren w1 bzw. w2 multipliziert, wodurch für die Sendeantenne Ant1 ein gewichtetes Antennensignal A1 bzw. für die Sendeantenne Ant2 ein gewichtetes Antenennsignal A2 gebildet wird.

Die Bildung bzw. Generierung der teilnehmerspezifischen Wichtungsfaktoren w1 und w2 erfolgt mit Hilfe einer Einrichtung WGEN und basiert auf Feedback-Informationen FBI, die mit Hilfe einer Einrichtung FBI-GEN gewonnen werden. Die FeedbackInformationen FBI werden aus einer Uplink-Verbindung gewonnen, die mit Hilfe des "Uplink Dedicated Physical Data Channel" (DPCCH), also des teilnehmerspezifischen physikalischen Datenübertragungskanals, durchgeführt wird.

Das gewichtete Antennensignal A1 wird mit einem Pilotsignal CPICH₁ eines sogenannten "Common Pilot Channel" CPICH addiert und der Sendeantenne Ant1 zur Abstrahlung zugeführt, während das gewichtete Antennensignal A2 mit einem Pilotsignal CPICH₂ des "Common Pilot Channel" CPICH addiert und der Sendeantenne Ant2 zur Abstrahlung zugeführt wird. Der "Common Pilot Channel" CPICH bildet dabei einen gemeinsamen Pilotübertragungskanal.

Dieses Verfahren ist im UMTS-FDD-Standardisierungs-Dokument TS 25.214, Kapitel 7, ausführlich dargestellt.
Weitere Informationen sind zusätzlich den Standardisierungs-dokumenten TS 25.211 bis TS 25.215 entnehmbar.

FIG 2 zeigt ein Blockschaltbild zur Datenübertragung mit Hilfe eines "Grid-of-Beam"-Verfahrens, gemäß dem Stand der Technik.

Vergleichend zu FIG 1 wird das Informationssignal I des "Dedicated Physical Channel" DPCH mit Hilfe des Spreizcodes SPC gespreizt, mit Hilfe des Vetwürflungscodes SCC verwürfelt und ein Eingangssignal E2 gebildet. Das Eingangssignal E2 wird nachfolgend mit einem Pilotsignal S-CPICH₁ eines sogenannten "Secondary Common Pilot Channel" S-CPICH zur Bildung eines Antennensignals A3 addiert. Der "Secondary Common Pilot Channel" S-CPICH ist für UMTS-FDD standardisiert und ist strahlungsdiagrammspezifisch einem Teilnehmer bzw. einer Gruppe von Teilnehmern zuordenbar.

Das durch Addition gebildete Antennensignal A3 wird mit Wichtungsfaktoren w_{OL,1} bis w_{OL,4} multipliziert und ein derart gebildetes gewichtetes Antennensignal A4 gelangt an insgesamt vier Antennen Ant1 bis Ant4 eines Antennenarrays zur Abstrahlung. Die Wichtungsfaktoren w_{OL,1} bis w_{OL,4} bilden einen Vektor w_{OL}*.

Die Wichtungsfaktoren w_{OL,1} bis w_{OL,4} werden mit Hilfe einer Einrichtung BFW-GEN strahlungsdiagrammspezifisch und basierend auf einer Schätzung einer Uplink-Verbindung vom Teilnehmer zum NodeB gewonnen.

Das hier gezeigt Verfahren ist in der Druckschrift "DOWNLINK BEAMFORMING FOR FREQUENCY DIVISION DUPLEX SYSTEMS", K.Hugl, J.Läurila, E.Bonek, Proceedings of Global Telecommunications Conference (GLOBECOM), Rio de Janeiro, December 1999 bzw. in der Druckschrift "The Spectrum Efficiency of a Basestation Antennas Array System for Spatially Selective Transmission", P.Zetterberg, B.Ottersten, IEEE Transactions on Vehicular Technology, Vol. 44, pp. 651-660, Aug. 1995 bzw. in der Druckschrift "Frequency Transformation Based Downlink Beamforming", K. Hugl, Proceedings COST259/260 Joint Workshop Spatial Channel Models and Adaptive Antennas, pp. 111-118, April 1999, Vienna, Austria, näher beschrieben.

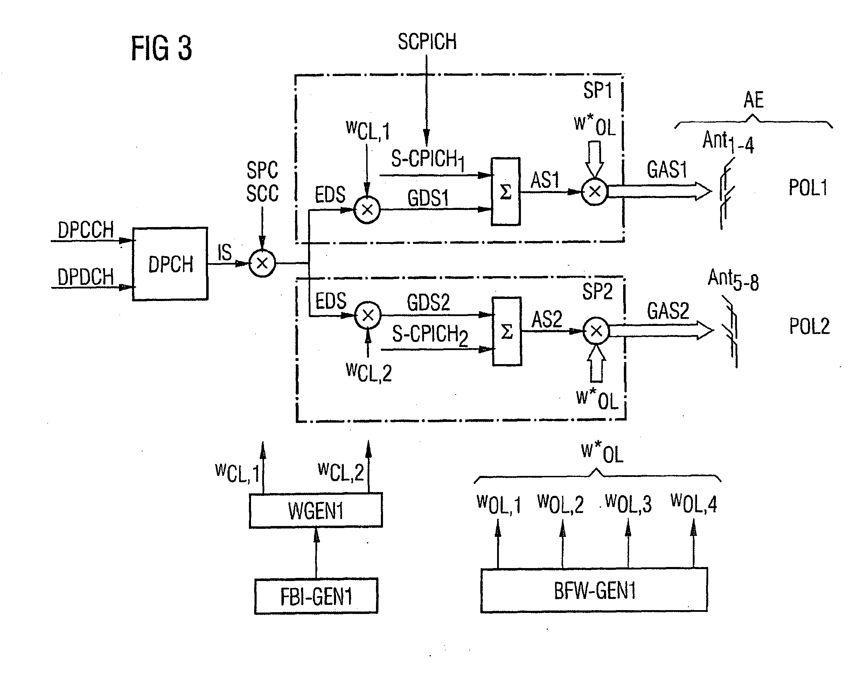

FIG 3 zeigt ein Blockschaltbild zur Datenübertragung gemäß der vorliegenden Erfindung.

Bei einem FDD-UMTS-Funkkommunikationssystem, Release '99, werden vergleichend mit FIG 1 Steuerungsdaten eines "Dedicated Physical Control Channel" (DPCCH), der einen teilnehmerspezifischen physikalischen Kontrollübertragungskanal bildet, mit Daten eines "Uplink Dedicated Physical Data Channel" (DPDCH), der einen teilnehmerspezifischen physikalischen Datenübertragungskanal bildet, mit Hilfe eines Multiplexverfahrens zu einem Informationssignal IS eines "Dedicated Physical Channel" (DPCH) zusammengefasst, der einen teilnehmerspezifischen physikalischen Übertragungskanal bildet.

Das Informationssignal IS wird mit Hilfe eines Spreizcodes SPC ("spreading code') und mit Hilfe eines Verwürfelungscodes SCC ("scrambling code") gespreizt, verwürfelt und dadurch ein. Eingangsdatensignal EDS für eine nachfolgende Verarbeitung gebildet.

Seitens einer als NodeB ausgestalteten zentralen Funkkommunikationseinrichtung ist eine Antenneneinrichtung AE mit Antennenelementen Ant1 bis Ant8 vorgesehen, wobei die Antennenelemente Ant1 bis Ant4 einer ersten Gruppe mit einer ersten Polarisation POL1 und die Antennenelemente Ant5 bis Ant8 einer zweiten Gruppe mit einer zweiten Polarisation POL2 zugeordnet sind. Dabei sind die Antennenelemente Ant1 bis Ant4 der ersten Gruppe +45°polarisiert, während die Antennenelemente Ant5 bis Ant8 der zweiten Gruppe -45°polarisiert sind.

Hier nicht dargestellt ist eine erste horizontale Polarisation Pol1 und eine zweite vertikale Polarisation Pol2, die ebenfalls erfindungsgemäß zuordenbar sind. Eine Verwendung von dual-polarisierten Antennen zur Bildung der Antenneneinrichtung AE ist wegen geringer mechanischer Abmessungen bei der Antennenanordnung AE besonders bevorzugt.

Besonders vorteilhaft sind die Antennenelemente Ant1 bis Ant4 und die Antennenelemente Ant5 bis Ant8 zu einer Dualpolarisierten Antennenanordnung zusammengefasst, die mit besonders geringem mechanischen Platzbedarf realisierbar ist.

Hier nicht dargestellt ist jedoch auch eine Space-Diversity-Antennenanordnung als Antenneneinrichtung AE einsetzbar. Dabei wären die Antennenelemente Ant1 bis Ant8 jeweils gleich polarisiert, jedoch wären die Antennenelemente Ant1 bis Ant4 der ersten Gruppe räumlich von den Antennenelementen Ant5 bis Ant8 der zweiten Gruppe getrennt.

Jeder Antennengruppe bzw. jeder Polarisation POL1, POL2 wird jeweils ein Signalpfad SP1, SP2 zugeordnet. So wird der ersten Gruppe mit der ersten Polarisation POL1 ein erster Signalpfad SP1 und der zweiten Polarisation POL2 ein zweiter Signalpfad SP2 zugeordnet.

Das Eingangsdatensignal EDS gelangt sowohl an den ersten Signalpfad SP1 als auch an den zweiten Signalpfad SP2. Innerhalb des ersten Signalpfads SP1 bzw. des zweiten Signalpfads SP2 wird das Eingangsdatensignal EDS mit einem teilnehmerspezifischen Wichtungsfaktor W_{CL,1} bzw. W_{CL,2} zur Bildung eines gewichteten Datensignals GDS1 bzw. GDS2 multipliziert. Das gewichtete Datensignal GDS1 bzw. GDS2 wird in jedem einzelnen Signalpfad SP1 bzw. SP2 mit einem strahlungsdiagrammspezifisch zuordenbaren Pilotsignal S-CPICH₁ bzw. S-CPICH₂ eines SCPICH-Kanals, der einen "Secondary Common Pilot Channel" bildet, zur Bildung eines Antennensignals AS1 bzw. AS2 addiert.

Das Antennensignal AS1 bzw. AS2 wird innerhalb jedes einzelnen Signalpfads SP1 bzw. SP2 mit strahlungsdiagrammspezifischen Wichtungsfaktoren w_{OL,1} bis w_{OL,4} zur Bildung von gewichteten Antennensignalen GAS1 bzw. GAS2 multipliziert, wobei die Wichtungsfaktoren w_{OL,1} bis w_{OL,4} einen Vektor w_{OL}* bilden.

Ein erstes gewichtetes Antennensignal GAS1 gelangt zur Abstrahlung an die erste Gruppe mit den Antennenelementen Ant1 bis Ant4, die die erste Polarisation POL1 aufweisen, während ein zweites gewichtetes Antennensignal GAS2 an die zweite Gruppe mit den Antennenelementen Ant5 bis Ant8 zur Abstrahlung gelangt, die die zweite Polarisation POL2 aufweisen.

Das Pilotsignal S-CPICH₁ und das Pilotsignal S-CPICH₂ unterscheiden sich im Spreizcode um seitens des Teilnehmers eine Detektion bzw. Zuordnung vornehmen zu können.

Die Bildung bzw. Generierung der teilnehmerspezifischen Wichtungsfaktoren W_{CL,1} bzw. W_{CL,2} erfolgt mit Hilfe einer Einrichtung WGEN1 und basiert auf Feedback-Informationen FBI, die mit Hilfe einer Einrichtung FBI-GEN1 gewonnen werden. Die Feedback-Informationen FBI werden aus einer Uplink-Verbindung, die mit Hilfe des "Uplink Dedicated Physical Data Channel" (DPCCH), also des teilnehmerspezifischen physikalischen Datenübertragungskanals, durchgeführt wird, gewonnen und ist beispielsweise im Standardisierungs-Dokument TS 25.214 näher beschrieben.

Die strahlungsdiagrammspezifischen Wichtungsfaktoren w_{OL,1} bis w_{OL,4} werden mit Hilfe einer Einrichtung BFW-GEN1 strahlungsdiagrammspezifisch und basierend auf einer Schätzung einer Uplink-Verbindung vom Teilnehmer zum NodeB gewonnen. Näheres dazu ist den unter FIG 2 genannten Druckschriften entnehmbar.

Von den Antennenelementen Ant1 bis Ant4 wird mit Hilfe des erfindungsgemäßen Verfahrens auf einen Teilnehmer TN bzw. auf eine Gruppe mehrerer Teilnehmer ein +45° polarisiertes Strahlungsdiagramm gerichtet, während von den Antennenelementen Ant5 bis Ant8 ein -45° polarisiertes Strahlungsdiagramm auf den Teilnehmer bzw. auf die Gruppe der Teilnehmer gerichtet wird.

Das in FIG 3 beschriebene Informationssignal IS wird teilnehmerspezifisch gebildet.
Für den hier nicht dargestellten Fall, dass das Informationssignal IS aus teilnehmerspezifischen Daten eines PDSCH-Übertragungskanals oder eines HS-PDSCH-Übertragungskanals oder aus teilnehmerspezifischen Kontrolldaten eines HS-SCCH-Kontrollübertragungskanals gebildet wird, ist das erfindungsgemäße Verfahren ebenfalls anwendbar. Die Bildung dieser Informationssignale IS ist den Standardisierungs-Dokumenten TS 25.211 bis TS 25.215 entnehmbar.

## Patentansprüche

1. Verfahren zur Datenübertragung von einer zentralen Funkkommunikationseinrichtung zu einem Teilnehmer eines UMTS-FDD-Funkkommunikationssystems
- bei dem ein teilnehmerspezifisches Informationssignal (IS) gespreizt und verwürfelt als Eingangsdatensignal (EDS) an mindestens zwei Signalpfade (SP1,SP2) gelangt,
- bei dem in jedem Signalpfad (SP1,SP2) das Eingangsdatensignal (EDS) mit teilnehmerspezifischen Wichtungsfaktoren (W_{CL,1} , W_{CL,2}) zur Bildung eines gewichteten Datensignals (GDS1, GDS2) multipliziert wird, wobei die Wichtungsfaktoren ((W_{CL,1} , W_{CL,2}) aus Feedback-Informationen einer Uplink-Verbindung vom Teilnehmer zur zentralen Funkkommunikationseinrichtung gewonnen werden,
- bei dem in jedem Signalpfad (SP1, SP2) das gewichtete Datensignal (GDS1, GDS2) mit einem strahlungsdiagrammspezifischen Pilotsignal (SCPICH₁, SCPICH₂) eines gemeinsamen Pilotübertragungskanals (SCPICH) zur Bildung eines Antennensignals (AS1, AS2) addiert wird,
- bei dem in jedem Signalpfad (SP1, SP2) das Antennensignal (AS1, AS2) mit strahlungsdiagrammspezifischen Wichtungsfaktoren (W_{OL,2}, ..., W_{OL,4}) zur Bildung eines gewichteten Antenennsignals (GAS1, GAS2) multipliziert wird, wobei die Wichtungsfaktoren (W_{OL,1},..., W_{OL,4}) basierend auf einer Uplink-Verbindung vom Teilnehmer zur zentralen Funkkommunikationseinrichtung geschätzt werden,
- bei dem das gewichtete Antennensignal (GAS1) eines ersten Signalpfads (SP1) an eine erste Gruppe von Antennenelementen (Ant1 bis Ant4) und das gewichtete Antennensignal (GAS2) eines zweiten Signalpfads (SP2) an eine zweite Gruppe von Antennenelementen (Ant5 bis Ant8) einer Antenneneinrichtung (AE) zur Abstrahlung gelangt, wobei die Antennenelemente (Ant1 bis Ant8) der ersten und der zweiten Gruppe eine Polarisationsdiversity-Antennenanordnung oder eine Spacediversity-Antennenanordnung bilden.

2. Verfahren nach Anspruch 1, bei dem die Antennenelemente (ANT1,...,ANT8) der ersten Gruppe einer ersten Polarisation (POL1) und die der zweiten Gruppe einer zweiten Polarisation (POL2) zugeordnet werden.

3. Verfahren nach Anspruch 2, bei dem der Polarisation der ersten Gruppe eine zur Polarisation der zweiten Gruppe orthogonale Polarisation (POL1,POL2) zugewiesen wird oder bei der die Polarisationen (Pol1,Pol2) der beiden Gruppen gleich sind.

4. Verfahren nach Anspruch 3,
- bei dem als erste Polarisation (POL1) eine +45°Polarisation und als zweite Polarisation (POL2) eine -45°Polarisation verwendet wird, oder
- bei dem als erste Polarisation (POL1) eine horizontale Polarisation und als zweite Polarisation (POL2) eine vertikale Polarisation verwendet wird.

5. Verfahren nach einem der Ansprüche 2 bis 4, bei dem die gewichteten Antennensignale (GAS1) des ersten Signalpfads (SP1) über die erste Polarisation (POL1) und die gewichteten Antennensignale (GAS2) des zweiten Signalpfads (SP2) über die zweite Polarisation (POL2) abgestrahlt werden.

6. Verfahren nach einem der vorhergehenden Ansprüche, bei dem die teilnehmerspezifischen Wichtungsfaktoren (W_{CL,1} , W_{CL,2}) aus einer Uplink-Verbindung mit einem teilnehmerspezifischen physikalischen Kontrollübertragungskanal (DPCCH) gewonnen werden.

7. Verfahren nach einem der vorhergehenden Ansprüche, bei dem die strahlungsdiagrammspezifischen Wichtungsfaktoren (W_{OL,1},..., W_{OL,4}) basierend auf einer Funkübertragungskanalschätzung der teilnehmerspezifischen Verbindung (UL) vom Teilnehmer (TN) zur zentralen Funkkommunikationseinrichtung (NodeB) gewonnen werden.

8. Verfahren nach einem der vorhergehenden Ansprüche, bei dem sich die strahlungsdiagrammspezifischen Pilotsignale (SCPICH₁,SCPICH₂) der beiden Signalpfade (SP1, SP2) im Spreizcode unterscheiden.

9. Verfahren nach einem der vorhergehenden Ansprüche, bei dem das Informationssignal (IS) aus Daten eines teilnehmerspezifischen physikalischen Datenübertragungskanals (DPDCH) und aus Steuerungsdaten eines teilnehmerspezifischen physikalischen Kontrollübertragungskanals (DPCCH) mit Hilfe eines Multiplexverfahrens das Informationssignal (IS) eines teilnehmerspezifischen physikalischen Übertragungskanals (DPCH) gebildet werden.

10. Verfahren nach Anspruch 9, bei dem als teilnehmerspezifischer physikalischer Datenübertragungskanal ein DPDCH-Kanal und als teilnehmerspezifischer physikalischer Kontrollübertragungskanal ein DPCCH-Kanal und als teilnehmerspezifischer physikalischer Übertragungskanal ein DPCH-Kanal des UMTS-FDD-Funkkommunikationssystems verwendet wird.

11. Verfahren nach einem Ansprüche 1 bis 8, bei dem das Informationssignal (IS) aus teilnehmerspezifischen Daten eines PDSCH-Übertragungskanals oder eines HS-PDSCH-Übertragungskanals oder aus teilnehmerspezifischen Kontrolldaten eines HS-SCCH-Kontrollübertragungskanals des UMTS-FDD-Funkkommunikationssystems gebildet werden.

12. Verfahren nach einem der vorhergehenden Ansprüche, bei dem als gemeinsamer Pilotübertragungskanal ein SCPICH-Kanal des UMTS-FDD-Funkkommunikationssystems verwendet wird.

13. Vorrichtung zur Datenübertragung von einer zentralen Funkkommunikationseinrichtung zu einem Teilnehmer eines UMTS-FDD-Funkkommunikationssystems, die Vorrichtung umfassend
- Mittel zum Leiten eines teilnehmerspezifischen Informationssignals (IS) gespreizt und verwürfelt als Eingangsdatensignal (EDS) an mindestens zwei Signalpfade (SP1, SP2),
- Mittel zum Multiplizieren des Eingangsdatensignals (EDS) mit teilnehmerspezifischen Wichtungsfaktoren (W_{CL,1} , W_{CL,2}) in jedem Signalpfad (SP1, SP2) zur Bildung eines gewichteten Datensignals (GDS1, GDS2),
wobei die Wichtungsfaktoren ((W_{CL,1} , W_{CL,2}) aus Feedback-Informationen einer Uplink-Verbindung vom Teilnehmer zur zentralen Funkkommunikationseinrichtung gewonnen werden,
- Mittel zum Addieren des gewichteten Datensignals (GDS1,GDS2) mit einem strahlungsdiagrammspezifischen Pilotsignal (SCPICH₁,SCPICH₂) eines gemeinsamen Pilotübertragungskanals (SCPICH) in jedem Signalpfad (SP1,SP2) zur Bildung eines Antennensignals (AS1,AS2),
- Mittel zum Multiplizieren des Antennensignals (AS1,AS2) mit strahlungsdiagrammspezifischen Wichtungsfaktoren (W_{OL,1},..., W_{OL,4}) in jedem Signalpfad (SP1, SP2) zur Bildung eines gewichteten Antenennsignals (GAS1,GAS2), wobei die Wichtungsfaktoren (W_{OL,1},..., W_{OL,4}) basierend auf einer Uplink-Verbindung vom Teilnehmer zur zentralen Funkkommunikationseinrichtung geschätzt werden,
- Mittel zum Leiten des gewichteten Antennensignals (GAS1) eines ersten Signalpfads (SP1) an eine erste Gruppe von Antennenelementen (Ant1 bis Ant4) einer Antenneneinrichtung (AE) und
- Mittel zum Leiten des gewichteten Antennensignals (GAS2) eines zweiten Signalpfads (SP2) an eine zweite Gruppe von Antennenelementen (Ant5 bis Ant8) der Antenneneinrichtung (AE) zur Abstrahlung,
wobei die Antennenelemente (Ant1 bis Ant8) der ersten und der zweiten Gruppe eine PolarisationsdiversityAntennenanordnung oder eine Spacediversity-Antennenanordnung bilden.

14. UMTS-FDD Funkkommunikationsystem zur Datenübertragung von einer zentralen Funkkommunikationseinrichtung zu einem Teilnehmer, mit einer zentralen Funkkommunikationseinrichtung umfassend
- Mittel zum Leiten eines teilnehmerspezifischen Informationssignals (IS) gespreizt und verwürfelt als Eingangsdatensignal (EDS) an mindestens zwei Signalpfade (SP1,SP2),
- Mittel zum Multiplizieren des Eingangsdatensignals (EDS) mit teilnehmerspezifischen Wichtungsfaktoren (W_{CL,1}, W_{CL,2}) in jedem Signalpfad (SP1, SP2) zur Bildung eines gewichteten Datensignals (GDS1, GDS2),
wobei die Wichtungsfaktoren ((W_{CL,1},W_{CL,2}) aus Feedback-Informationen einer Uplink-Verbindung vom Teilnehmer zur zentralen Funkkommunikationseinrichtung gewonnen werden,
- Mittel zum Addieren des gewichteten Datensignals (GDS1,GDS2) mit einem strahlungsdiagrammspezifischen Pilotsignal (SCPICH₁,SCPICH₂) eines gemeinsamen Pilotübertragungskanals (SCPICH) in jedem Signalpfad (SP1,SP2) zur Bildung eines Antennensignals (AS1,AS2),
- Mittel zum Multiplizieren des Antennensignals (AS1,AS2) mit strahlungsdiagrammspezifischen Wichtungsfaktoren (W_{OL,1},...,W_{OL,4}) in jedem Signalpfad (SP1, SP2) zur Bildung eines gewichteten Antenennsignals (GAS1,GAS2), wobei die Wichtungsfaktoren (W_{OL,1},..., W_{OL,4}) basierend auf einer Uplink-Verbindung vom Teilnehmer zur zentralen Funkkommunikationseinrichtung geschätzt werden,
- Mittel zum Leiten des gewichteten Antennensignals (GAS1) eines ersten Signalpfads (SP1) an eine erste Gruppe von Antennenelementen (Ant1 bis Ant4) einer Antenneneinrichtung (AE) und
- Mittel zum Leiten des gewichteten Antennensignals (GAS2) eines zweiten Signalpfads (SP2) an eine zweite Gruppe von Antennenelementen (Ant5 bis Ant8) der Antenneneinrichtung (AE) zur Abstrahlung,
wobei die Antennenelemente (Ant1 bis Ant8) der ersten und der zweiten Gruppe eine Polarisationsdiversity-Antennenanordnung oder eine Spacediversity-Antennenanordnung bilden.

## Claims

1. Method for data transmission from a central radio communication device to a subscriber of a UMTS-FDD radio communication system
- in which a subscriber-specific information signal (IS) arrives spread and scrambled as an input data signal (EDS) at at least two signal paths (SP1,SP2),
- in which in each signal path (SP1,SP2) the input data signal (EDS) is multiplied by subscriber-specific weighting factors (W_{CL,1} , W_{CL,2}) to form a weighted data signal (GDS1,GDS2), with the weighting factors ((W_{CL,1} , W_{CL,2}) being obtained from feedback information of an uplink connection from the subscriber to the central radio communication device,
- in which, in each signal path (SP1,SP2), the weighted data signal (GDS1,GDS2) is added to a radiation diagram-specific pilot signal (SCPICH₁,SCPICH₂) of a common pilot transmission channel (SCPICH) to form an antenna signal (AS1,AS2),
- in which, in each signal path (SP1,SP2), the antenna signal (AS1,AS2) is multiplied by radiation diagram-specific weighting factors (W_{OL,1},...,W_{OL,4}) to form a weighted antenna signal (GAS1,GAS2), with the weighting factors (W_{OL,1},...,W_{OL,4}) being estimated on the basis of an uplink connection from the subscriber to the central radio communication device,
- in which the weighted antenna signal (GAS1) of a first signal path (SP1) arrives at a first group of antenna elements (Ant1 to Ant4) and the weighted antenna signal (GAS2) of a second signal path (SP2) arrives at a second group of antenna elements (Ant5 to Ant8) of an antenna device (AE) for radiation,
where the antenna elements (Ant1 to Ant8) of the first and the second group form a polarization diversity antenna arrangement or a space diversity antenna arrangement.

2. Method in accordance with Claim 1, in which the antenna elements (ANT1,...,ANT8) of the first group are assigned to a first polarization (POL1) and of the second group to a second polarization (POL2).

3. Method in accordance with Claim 2, in which the polarization of the first group is allocated a polarization orthogonal to the polarization of the second group (POL1,POL2) or in which the polarizations (Pol1,Pol2) of the two groups are the same.

4. Method in accordance with Claim 3,
- in which a +45°polarization is used as first polarization (POL1) and a -45°polarization is used as second polarization (POL2), or
- in which a horizontal polarization is used as first polarization (POL1) and a vertical polarization as second polarization (POL2).

5. Method in accordance with one of the Claims 2 to 4, in which the weighted antenna signals (GAS1) of the first signal path (SP1) are radiated via the first polarization (POL1) and the weighted antenna signals (GAS2) of the second signal path (SP2) are radiated via the second polarization (POL2).

6. Method in accordance with one of the previous claims, in which the subscriber-specific weighting factors (W_{CL,1}, W_{CL,2}) are obtained from an uplink connection with a subscriber-specific physical dedicated physical control channel (DPCCH).

7. Method in accordance with one of the previous claims, in which the signal space diagram-specific weighting factors (W_{OL,1},...,W_{OL,4}) are obtained on the basis of a radio transmission channel estimation of the uplink connection (UL) from the subscriber (TN) to the central radio communication device (NodeB).

8. Method in accordance with one of the previous claims, in which the signal space diagram-specific pilot signals (SCPICH₁,SCPICH₂) of the two signal paths (SP1,SP2) differ in their spread spectrum codes.

9. Method in accordance with one of the previous claims, in which the information signal (IS) is formed from data of a subscriber-specific dedicated physical data channel (DPDCH) and from control data of a subscriber-specific dedicated physical control channel (DPCCH) with the aid of a multiplexing procedure the information signal (IS) of a dedicated physical transmission channel (DPCH) is formed.

10. Method in accordance with Claim 9, in which a DPDCH channel is used as a dedicated physical data transmission channel and a DPCCH channel is used as a dedicated physical control channel and a DPCH channel of the UMTS-FDD radio communication system is used as a subscriber-specific physical transmission channel.

11. Method in accordance with one of the Claims 1 to 8, in which the information signal (IS) is formed from subscriber-specific data of a PDSCH transmission channel or of an HS-PDSCH transmission channel or from subscriber-specific control data of an HS-SCCH control channel of the UMTS-FDD radio communication system.

12. Method in accordance with one of the previous claims, in which an SCPICH channel of the UMTS-FDD radio communication system is used as common pilot transmission channel.

13. Apparatus for data transmission from a central radio communication device to a subscriber of a UMTS-FDD radio communication system, the apparatus comprising
- means for feeding a subscriber-specific information signal (IS) which arrives spread and scrambled as an input data signal (EDS) at at least two signal paths (SP1,SP2),
- means for multiplying in each signal path (SP1,SP2) the input data signal (EDS) by subscriber-specific weighting factors (W_{CL,1},W_{CL,2}) to form a weighted data signal (GDS1,GDS2), with the weighting factors ((W_{CL,1},W_{CL,2}) being obtained from feedback information of an uplink connection from the subscriber to the central radio communication device,
- means for adding in each signal path (SP1,SP2) the weighted data signal (GDS1,GDS2) to a radiation diagram-specific pilot signal (SCPICH₁,SCPICH₂) of a common pilot transmission channel (SCPICH) to form an antenna signal (AS1,AS2),
- means for multiplying in each signal path (SP1,SP2) the antenna signal (AS1,AS2) by radiation diagram-specific weighting factors (W_{OL,1},...,W_{OL,4}) to form a weighted antenna signal (GAS1,GAS2), with the weighting factors (W_{OL,1},...,W_{OL,4}) being estimated on the basis of an uplink connection from the subscriber to the central radio communication device,
- means for feeding the weighted antenna signal (GAS1) of a first signal path (SP1) at a first group of antenna elements (Ant1 to Ant4) of an antenna device (AE) for radiation, and
- means for feeding the weighted antenna signal (GAS2) of a second signal path (SP2) at a second group of antenna elements (Ant5 to Ant8) of the antenna device (AE) for radiation,
where the antenna elements (Ant1 to Ant8) of the first and the second group form a polarization diversity antenna arrangement or a space diversity antenna arrangement.

14. UMTS-FDD radio communication system for data transmission from a central radio communication device to a subscriber, the central radio communication device comprising
- means for feeding a subscriber-specific information signal (IS) which arrives spread and scrambled as an input data signal (EDS) at at least two signal paths (SP1,SP2),
- means for multiplying in each signal path (SP1,SP2) the input data signal (EDS) by subscriber-specific weighting factors (W_{CL,1} , W_{CL,2}) to form a weighted data signal (GDS1,GDS2), with the weighting factors ((W_{CL,1} , W_{CL,2}) being obtained from feedback information of an uplink connection from the subscriber to the central radio communication device,
- means for adding in each signal path (SP1,SP2) the weighted data signal (GDS1,GDS2) to a radiation diagram-specific pilot signal (SCPICH₁,SCPICH₂) of a common pilot transmission channel (SCPICH) to form an antenna signal (AS1,AS2),
- means for multiplying in each signal path (SP1,SP2) the antenna signal (AS1,AS2) by radiation diagram-specific weighting factors (W_{OL,1},...,W_{OL,4}) to form a weighted antenna signal (GAS1,GAS2), with the weighting factors (W_{OL,1},...,W_{OL,4}) being estimated on the basis of an uplink connection from the subscriber to the central radio communication device,
- means for feeding the weighted antenna signal (GAS1) of a first signal path (SP1) at a first group of antenna elements (Ant1 to Ant4) of an antenna device (AE) for radiation, and
- means for feeding the weighted antenna signal (GAS2) of a second signal path (SP2) at a second group of antenna elements (Ant5 to Ant8) of the antenna device (AE) for radiation,
where the antenna elements (Ant1 to Ant8) of the first and the second group form a polarization diversity antenna arrangement or a space diversity antenna arrangement.

## Revendications

1. Procédé de transmission de données d'un dispositif central de communication radio vers un abonné d'un système de communication radio UMTS FDD, selon lequel :
- un signal d'information spécifique à l'abonné (IS) parvient étalé et embrouillé, en tant que signal de données d'entrée (EDS), à au moins deux chemins de signal (SP1, SP2) ;
- dans chaque chemin de signal (SP1, SP2), le signal de données d'entrée (EDS) est multiplié par des facteurs de pondération spécifiques à l'abonné (W_{CL,1}, W_{CL,2}) pour former un signal de données pondéré (GDS1, GDS2), les facteurs de pondération (W_{CL,1}, W_{CL,2}) étant obtenus à partir d'informations de retour d'une liaison montante de l'abonné vers le dispositif central de communication radio ;
- dans chaque chemin de signal (SP1, SP2), le signal de données pondéré (GDS1, GDS2) est additionné avec un signal pilote spécifique au diagramme de rayonnement (SCPICH₁, SCPICH₂) d'un canal de transmission pilote commun (SCPICH) pour former un signal d'antenne (AS1, AS2) ;
- dans chaque chemin de signal (SP1, SP2), le signal d'antenne (AS1, AS2) est multiplié par des facteurs de pondération spécifiques au diagramme de rayonnement (W_{OL,1}, ..., W_{OL,4}) pour former un signal d'antenne pondéré (GAS1, GAS2), les facteurs de pondération (W_{OL,1}, ..., W_{OL,4}) étant estimés sur la base d'une liaison montante de l'abonné vers le dispositif central de communication radio ;
- le signal d'antenne pondéré (GAS1) d'un premier chemin de signal (SP1) parvient à un premier groupe d'éléments d'antenne (Ant1 à Ant4) et le signal d'antenne pondéré (GAS2) d'un deuxième chemin de signal (SP2), à un deuxième groupe d'éléments d'antenne (Ant5 à Ant8) d'un dispositif d'antenne (AE) pour être émis ;
- les éléments d'antenne (Ant1 à Ant8) du premier et du deuxième groupe forment un ensemble d'antennes à diversité de polarisation ou un ensemble d'antennes à diversité spatiale.

2. Procédé selon la revendication 1, selon lequel les éléments d'antenne (ANT1, ..., ANT8) du premier groupe sont associés à une première polarisation (POL1) et ceux du deuxième groupe, à une deuxième polarisation (POL2).

3. Procédé selon la revendication 2, selon lequel une polarisation (POL1, POL2) orthogonale à la polarisation du deuxième groupe est associée à la polarisation du premier groupe ou selon lequel les polarisations (Pol1, Pol2) des deux groupes sont identiques.

4. Procédé selon la revendication 3, selon lequel :
- est utilisée, en tant que première polarisation (POL1), une polarisation de +45° et, en tant que deuxième polarisation (POL2), une polarisation de -45° ou
- est utilisée, en tant que première polarisation (POL1), une polarisation horizontal et, en tant que deuxième polarisation (POL2), une polarisation verticale.

5. Procédé selon l'une des revendications 2 à 4, selon lequel les signaux d'antenne pondérés (GAS1) du premier chemin de signal (SP1) sont émis via la première polarisation (POL1) et les signaux d'antenne pondérés (GAS2) du deuxième chemin de signal (SP2) sont émis via la deuxième polarisation (POL2).

6. Procédé selon l'une des revendications précédentes, selon lequel les facteurs de pondération spécifiques à l'abonné (W_{CL,1}, W_{CL,2}) sont obtenus à partir d'une liaison montante avec un canal de transmission de contrôle physique spécifique à l'abonné (DPCCH).

7. Procédé selon l'une des revendications précédentes, selon lequel les facteurs de pondération spécifiques au diagramme de rayonnement (W_{OL,1}, ..., W_{OL,4}) sont obtenus sur la base d'une estimation de canal de transmission radio de la liaison spécifique à l'abonné (UL) de l'abonné (TN) vers le dispositif central de communication radio (NodeB).

8. Procédé selon l'une des revendications précédentes, selon lequel les signaux pilotes spécifiques au diagramme de rayonnement (SCPICH₁, SCPICH₂) des deux chemins de signal (SP1, SP2) diffèrent par le code d'étalement.

9. Procédé selon l'une des revendications précédentes, selon lequel le signal d'information (IS) est formé à partir de données d'un canal de transmission de données physique spécifique à l'abonné (DPDCH) et, à partir de données de commande d'un canal de transmission de contrôle physique spécifique à l'abonné (DPCCH), à l'aide d'un procédé de multiplexage, le signal d'information (IS) d'un canal de transmission physique spécifique à l'abonné (DPCH).

10. Procédé selon la revendication 9, selon lequel un canal DPDCH est utilisé en tant que canal de transmission de données physique spécifique à l'abonné, un canal DPCCH, en tant que canal de transmission de contrôle physique spécifique à l'abonné et un canal DPCH du système de communication radio UMTS FDD, en tant que canal de transmission physique spécifique à l'abonné.

11. Procédé selon l'une des revendications 1 à 8, selon lequel le signal d'information (IS) est formé à partir de données, spécifiques à l'abonné, d'un canal de transmission PDSCH ou d'un canal de transmission HS-PDSCH ou à partir de données de contrôle, spécifiques à l'abonné, d'un canal de transmission de contrôle HS-SCCH du système de communication radio UMTS FDD.

12. Procédé selon l'une des revendications précédentes, selon lequel un canal SCPICH du système de communication radio UMTS FDD est utilisé en tant que canal de transmission pilote commun.

13. Dispositif de transmission de données d'un dispositif central de communication radio vers un abonné d'un système de communication radio UMTS FDD, le dispositif comprenant :
- des moyens pour acheminer un signal d'information spécifique à l'abonné (IS), sous forme étalée et embrouillée, en tant que signal de données d'entrée (EDS), vers au moins deux chemins de signal (SP1, SP2) ;
- des moyens pour multiplier le signal de données d'entrée (EDS) par des facteurs de pondération spécifiques à l'abonné (W_{CL},₁, W_{CL,2}) dans chaque chemin de signal (SP1, SP2) pour former un signal de données pondéré (GDS1, GDS2), les facteurs de pondération (W_{CL,1}, W_{CL},₂) étant obtenus à partir d'informations de retour d'une liaison montante de l'abonné vers le dispositif central de communication radio ;
- des moyens pour additionner le signal de données pondéré (GDS1, GDS2) avec un signal pilote spécifique au diagramme de rayonnement (SCPICH₁, SCPICH₂) d'un canal de transmission pilote commun (SCPICH) dans chaque chemin de signal (SP1, SP2) pour former un signal d'antenne (AS1, AS2) ;
- des moyens pour multiplier le signal d'antenne (AS1, AS2) par des facteurs de pondération spécifiques au diagramme de rayonnement (W_{OL,1}, ..., W_{OL,4}) dans chaque chemin de signal (SP1, SP2) pour former un signal d'antenne pondéré (GAS1, GAS2), les facteurs de pondération (W_{OL,1}, ..., W_{OL,4}) étant estimés sur la base d'une liaison montante de l'abonné vers le dispositif central de communication radio ;
- des moyens pour acheminer le signal d'antenne pondéré (GAS1) d'un premier chemin de signal (SP1) vers un premier groupe d'éléments d'antenne (Ant1 à Ant4) d'un dispositif d'antenne (AE) et
- des moyens pour acheminer le signal d'antenne pondéré (GAS2) d'un deuxième chemin de signal (SP2) vers un deuxième groupe d'éléments d'antenne (Ant5 à Ant8) du dispositif d'antenne (AE) pour être émis,
les éléments d'antenne (Ant1 à Ant8) du premier et du deuxième groupe formant un ensemble d'antennes à diversité de polarisation ou un ensemble d'antennes à diversité spatiale.

14. Système de communication radio UMTS FDD pour la transmission de données d'un dispositif central de communication radio vers un abonné, comportant un dispositif central de communication radio comprenant :
- des moyens pour acheminer un signal d'information spécifique à l'abonné (IS), sous forme étalée et embrouillée, en tant que signal de données d'entrée (EDS), vers au moins deux chemins de signal (SP1, SP2) ;
- des moyens pour multiplier le signal de données d'entrée (EDS) par des facteurs de pondération spécifiques à l'abonné (W_{CL,1}, W_{CL,2}) dans chaque chemin de signal (SP1, SP2) pour former un signal de données pondéré (GDS1, GDS2), les facteurs de pondération (W_{CL,1}, W_{CL,2}) étant obtenus à partir d'informations de retour d'une liaison montante de l'abonné vers le dispositif central de communication radio ;
- des moyens pour additionner le signal de données pondéré (GDS1, GDS2) avec un signal pilote spécifique au diagramme de rayonnement (SCPICH₁, SCPICH₂) d'un canal de transmission pilote commun (SCPICH) dans chaque chemin de signal (SP1, SP2) pour former un signal d'antenne (AS1, AS2) ;
- des moyens pour multiplier le signal d'antenne (AS1, AS2) par des facteurs de pondération spécifiques au diagramme de rayonnement (W_{OL,1}, ..., W_{OL,4}) dans chaque chemin de signal (SP1, SP2) pour former un signal d'antenne pondéré (GAS1, GAS2), les facteurs de pondération (W_{OL,1}, ..., W_{OL,4}) étant estimés sur la base d'une liaison montante de l'abonné vers le dispositif central de communication radio ;
- des moyens pour acheminer le signal d'antenne pondéré (GAS1) d'un premier chemin de signal (SP1) vers un premier groupe d'éléments d'antenne (Ant1 à Ant4) d'un dispositif d'antenne (AE) et
- des moyens pour acheminer le signal d'antenne pondéré (GAS2) d'un deuxième chemin de signal (SP2) vers un deuxième groupe d'éléments d'antenne (Ant5 à Ant8) du dispositif d'antenne (AE) pour être émis,
les éléments d'antenne (Ant1 à Ant8) du premier et du deuxième groupe formant un ensemble d'antennes à diversité de polarisation ou un ensemble d'antennes à diversité spatiale.
